(19) Europäisches Patentamt
European Patent Office
Office européen des brevets

(11) Publication number: **0 365 053 B1**

# (12) EUROPEAN PATENT SPECIFICATION

(45) Date of publication of patent specification: **04.05.94**

(51) Int. Cl.[5]: **C08K 5/18**, C08L 27/18

(21) Application number: **89122521.1**

(22) Date of filing: **10.07.86**

(60) Publication number of the earlier application in accordance with Art.76 EPC: **0 208 314**

## (54) Peroxide-curable brominated fluoroelastomer compositions.

(30) Priority: **12.07.85 US 754499**
**11.12.85 US 807611**
**17.06.86 US 873165**

(43) Date of publication of application:
**25.04.90 Bulletin 90/17**

(45) Publication of the grant of the patent:
**04.05.94 Bulletin 94/18**

(84) Designated Contracting States:
**DE FR GB IT NL**

(56) References cited:
**US-A- 4 214 060**
**US-A- 4 529 759**

(73) Proprietor: **E.I. DU PONT DE NEMOURS AND COMPANY**
**1007 Market Street**
**Wilmington Delaware 19898(US)**

(72) Inventor: **Ojakaar, Leo**
**8 Jacqueline Drive, RD 1**
**Hockessin Delaware 19707(US)**
Inventor: **Moore, Albert Lloyd**
**2213 Old Orchard Road**
**Wilmington Delaware 19810(US)**

(74) Representative: **von Kreisler, Alek, Dipl.-Chem. et al**
**Patentanwälte**
**von Kreisler-Selting-Werner**
**Postfach 10 22 41**
**D-50462 Köln (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

This invention relates to peroxide curable fluoroelastomer compositions that contain N,N,N',N'-tetrasubstituted 1,8-diaminonaphthalene that function as mold release agents.

Vinylidene fluoride-based polymers, such as copolymers of vinylidene fluoride and hexafluoropropylene, optionally containing tetrafluoroethylene, have achieved outstanding commercial success. However, in certain applications in which these fluoroelastomers are in contact with amines or strong bases at high temperatures, the fluoroelastomers are attacked by these materials and they lose their elastomeric characteristics principally by becoming hard and brittle. Such is the case when vinylidene fluoride-based fluoroelastomers are used as seals in oil drilling operations where the fluoroelastomer is exposed to a combination of both high and low temperatures, amines and hydrogen sulfide, all of which are associated with oil well drilling environments. Other fluoroelastomers that are known to be resistant to attack by amines, such as copolymers of tetrafluoroethylene/propylene, cannot be used successfully where long term resistance to low temperature is required because these copolymers lose their flexibility at low temperatures and, further, since these fluoroelastomers contain a relatively large amount of propylene, they tend to swell in the presence of oil and, consequently increase in size.

Fluoroelastomers that contain ethylene and perfluorovinyl ethers at a molar ratio of ethylene to perfluorovinyl ether of 95:5 to 30:70 where the total content of ethylene plus perfluorovinyl ether is at least 70 mole percent are difficult to prepare commercially because the combination of ethylene and perfluorovinyl ether is not readily polymerizable to sufficiently high molecular weights and, additionally, high levels of expensive perfluorovinyl ether monomer must be used to attain a satisfactory fluorine content.

In the case of copolymers of ethylene/tetrafluoroethylene/perfluoro(alkyl vinyl ether)/cure-site monomer of the present invention having levels of 32-60 mole percent tetrafluoroethylene units, polymerization occurs more readily because of the reactivity of the tetrafluoroethylene monomer and high molecular weight fluoroelastomers are easily obtained. The high level of tetrafluoroethylene units incorporated in the fluoroelastomer gives the desired high level of fluorine in the polymer with only moderate amounts of the expensive perfluoro(alkyl vinyl ether).

Vinylidene fluoride-based fluoroelastomers which do not contain a cure-site monomer can be cured by conventional techniques by employing crosslinking agents such as diamines and bisphenols. However, the fluoroelastomers of the present invention that have a base-resistant polymer backbone cannot be cured in a practical manner by conventional techniques mentioned above, unless a cure-site monomer is incorporated in the polymer.

The vulcanizates of tetrafluoroethylene-containing peroxide curable fluoroelastomers tenaciously adhere to the walls of the mold cavity when shaped, and the shaped article is frequently torn or damaged when it is removed from the mold cavity.

The present invention provides a peroxide-curable tetrafluoroethylene-containing fluoroelastomer composition containing aromatic diamines which are N,N,N',N'-tetrasubstituted 1,8-diaminonaphthalenes. These compositions do not stick to the metal mold cavity and tear when ejected or removed from the mold cavity while, at the same time, the incorporation of the aromatic diamine into the polymer does not detrimentally affect its important physical properties such as compression set resistance, elongation at break and tensile strength.

### SUMMARY OF THE INVENTION

The present invention is directed to a peroxide-curable fluoroelastomer composition which comprises

(a) a fluoroelastomer whose interpolymerized units consist of 30-80 mole % of units of tetrafluoroethylene, 20-40 mole % of units of perfluoroalkyl perfluorovinyl ether, up to 3 mole % of units of a bromine-containing olefin and, optionally, up to 40 mole % of units of ethylene, and

(b) from 0.05-2 parts per 100 parts fluoroelastomer of an N,N,N',N'-tetrasubstituted 1,8-diaminonaphthalene having the formula:

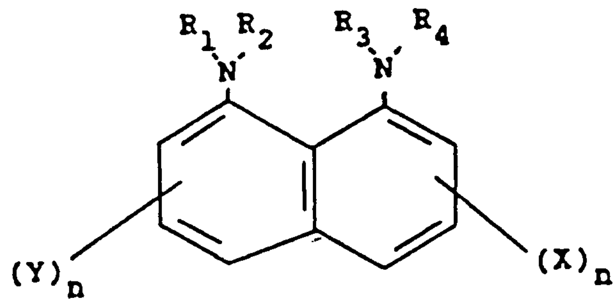

wherein $R_1$, $R_2$, $R_3$ and $R_4$ are independently alkyl groups of 1-6 carbon atoms, phenyl or benzyl, $R_1$ and $R_2$ and/or $R_3$ and $R_4$ can be joined to form a 5- or 6-membered heterocyclic ring in which a carbon atom can be replaced by an oxygen or a sulfur atom, $R_1$ and $R_3$ and/or $R_2$ and $R_4$ can be joined to form a heterocyclic ring of 6-20 carbon atoms in which a carbon atom can be replaced by an oxygen or a sulfur atom, X and Y are independently an alkyl group or an alkoxy group containing 1-4 carbon atoms and n is 0-3.

The resulting cured tetrafluoroethylene-containing fluoroelastomer compositions of the present invention can be used to make articles such as O-rings, hose, gaskets, shaft seals and the like.

## DESCRIPTION OF PREFERRED EMBODIMENTS

The perfluoro(alkyl vinyl ethers) that can be used in this invention usually contain alkyl groups having 1-5 carbon atoms. preferably 1-3 carbon atoms, and most preferably the perfluoro(alkyl vinyl ether) is perfluoro(methyl vinyl ether) because it is more readily polymerizable to allow preparation of high molecular weight fluoroelastomers. Representative perfluoro(alkyl vinyl ethers) include perfluoro(methyl vinyl ether), perfluoro(ethyl vinyl ether), perfluoro(propyl vinyl ether), perfluoro(butyl vinyl ether), perfluoro(pentyl vinyl ether). To obtain fluoroelastomers with lower glass transition temperatures, up to 5 mole percent of the perfluoro(alkyl vinyl ether) units can be replaced with perfluoro(alkoxy alkyl vinyl ether) units and, therefore, the term "perfluoro(alkyl vinyl ether)" as used herein is intended to include those monomers that also contain minor amounts of up to 5 mole percent of perfluoro(alkoxy alkyl vinyl ethers). Representative perfluoro(alkoxy alkyl vinyl ethers) wherein the alkoxy and alkyl groups each contain 1-5 carbon atoms that can be used in this invention include perfluoro-(2-n-propoxypropyl vinyl ether), perfluoro(3-methoxy-propyl vinyl ether), perfluoro(2-methoxypropyl vinyl ether) and perfluoro(2-methoxyethyl vinyl ether). If the fluoroelastomers of this invention contain more than 40 mole percent ethylene or less than 20 mole percent perfluoro(alkyl vinyl ether) then they are unsatisfactory because the fluoroelastomers are not sufficiently amorphous. If the fluoroelastomer contains more than about 3 mole percent the cure-site monomer, polymerization to the desired high molecular weight is difficult and the vulcanizate crosslinked density is too high for practical use as an elastomer. The fluoroelastomers of the present invention have good low temperature properties, i.e., the fluoroelastomers have glass transition temperatures (Tg), measured by a Differential Scanning Calorimeter in the heating mode at the onset of transition, of -10 °C or below, generally within a range of -10 to -20 °C.

The fluoroelastomers contain a cure-site monomer. The cure-site monomer is present in the fluoroelastomer in amounts up to 3 mole percent. Generally, at least 0.2 mole percent of cure-site monomer is present in the fluoroelastomer and, usually, not more than about 2 mole percent is required to be present in the fluoroelastomer. Various cure-site monomers can be incorporated into the backbone of the fluoroelastomer. Representative cure-site monomers include brominated or iodinated alpha-olefins containing 2-20 carbon atoms, or halogenated vinyl ethers, of the formulae:

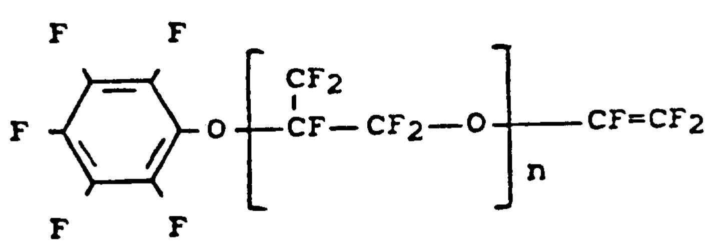

where n is 1 or 2,

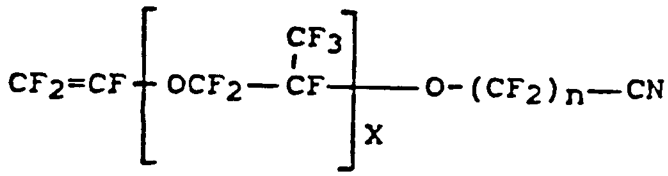

where n is 1 to 4, and X is 1 to 2,

$CX_2 = CXO(CX_2)_nCX_2Y$

where Y is chlorine, bromine or iodine, X is hydrogen or fluoride and n is 1 to 9. Preferably, the cure-site monomer is one that imparts peroxide curability to the fluoroelastomer, such as bromine-containing olefins or iodine-containing olefins. Peroxide-curable fluoroelastomers are preferred because of the enhanced hydrolytic stability of the vulcanizate.

The term "bromine-containing olefin" or "iodine-containing olefin" as used herein means an olefin in which at least one hydrogen atom has been replaced with a bromine atom or an iodine atom, respectively, and optionally, one or more of the remaining hydrogen atoms have been replaced with an atom of another halogen, preferably fluorine. Some compounds of this type are available commercially and others can be prepared by methods known in the art, for example, as shown by Tarrant and Tandon, J. Org. Chem. 34, 864 (1969) and by Fainberg and Miller, 79 JACS 4170 (1957) and J. Org. Chem. 42 1985-90 (1977). Representative bromine-containing olefins which are copolymerizable with the monomers used to form the fluoroelastomers of this invention include bromotrifluoroethylene, 1-bromo-2,2-difluoroethylene, 4-bromo-3,3,4,4-tetrafluorobutene-1, vinyl bromide, 1-bromo-2,2-difluoroethylene, perfluoroallyl bromide, 4-bromo-1,1,2-trifluorobutene, 4-bromo-1,1,3,3,4,4-hexafluorobutene, 4-bromo-3-chloro-1,1,3,4,4-pentafluorobutene, 6-bromo-5,5,6,6-tetrafluoro-hexene, 4-bromo-perfluorobutene-1, and 3,3-difluoroallylbromide. It is preferable to use sufficient units of the brominated olefin to provide at least 0.05 weight percent bromine, usually 0.3-1.5 weight percent bromine, in the fluoroelastomer. The fluoroelastomers contain up to 3 mole percent, based on the total moles of the fluoroelastomer, of units derived from the bromine-containing olefin, usually at least 0.2 mole percent. Bromine-containing olefins used in the process of this invention are further described in U.S. Patent 4,214,060. Representative iodine-containing olefins in amounts up to 3 mole percent which are copolymerizable with the monomers used to form the fluoroelastomers of this invention include compounds of the formula $CH_2 = CH(CF_2)_xI$ where x is 2-6, more specifically, iodoethylene, 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,-2,2-tetrafluoroethylene, 1,1,2,3,3,3-hexafluoro-2-iodo-1-(perfluorovinyloxy)propane, 2-iodoethyl vinyl ether, 3,3,4,5,5,5-hexafluoro-4-iodopentene, iodotrifluoroethylene, and preferably 4-iodo-3,3,4,4-tetrafluorobutene-1.

Additional cure-site monomers that can be incorporated in the fluoroelastomers described herein are represented by the formula:

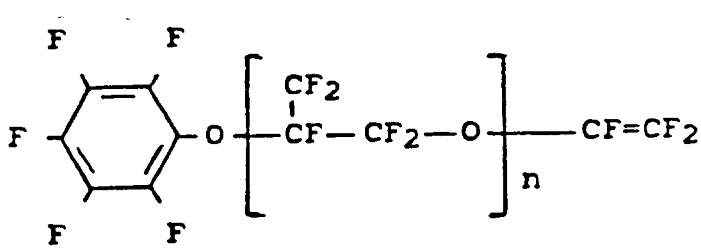

where n is 1 or 2. The fluoroelastomers containing these monomers are cured by the addition of aliphatic diamines containing 2-20 carbon atoms or hydrazine or bisphenols, preferably, in amounts of from 0.2-1 mole percent. Such cure-site monomers and their preparation are described in Pattison, U.S. Patent 3,467,638.

Other representative cure-site monomers that can be incorporated into the fluoroelastomers of the present invention have the formula:

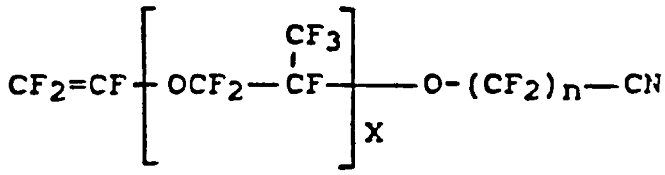

where n is 1 to 4, preferably 2 to 3 and x is 1 to 2, preferably 1. These cure-site monomers are incorporated into the fluoroelastomers, preferably in amounts of from 0.2-1 mole percent. The fluoroelastomers of this invention containing such cure sites are cured by the addition of 1-5 parts per hundred parts polymer of tetraphenyl tin. Such cure-site monomers and their preparation are described in U.S. Patent 4,281,092.

Other compounds useful as cure-site monomers for the fluoroelastomers of this invention are represented by the formula:

$CX_2 = CXO(CX_2)_nCX_2Y$

where Y is chlorine, bromine or iodine; X is hydrogen or fluorine; and n is 1 to 9. Representative examples include 2-chloroethyl vinyl ether and perfluoro(2-bromoethyl vinyl ether) usually used in amounts of from 0.2-3 mole percent. Such fluoroelastomers containing these cure sites are peroxide curable.

The fluoroelastomers of this invention are prepared by polymerizing ethylene, tetrafluoroethylene, perfluoroalkyl perfluorovinyl ether, and a cure-site monomer, by emulsion processes in which all the monomers are continuously added to the reactor in much the same manner, and under substantially the same conditions, as described in Apotheker et al., U.S. Patent 4,035,565, especially Example 1. For further details on such emulsion polymerization processes see also Moore, U.S. Patent 3,839,305 and Gladding et al., U.S. Patent 3,707,529.

More specifically, in preparing the fluoroelastomer to be used in the present invention, it is preferred that the reaction mixture of monomer components also contains a free-radical initiator, and the polymer-forming reaction is carried out as a free-radical emulsion polymerization reaction. Among the most useful free-radical initiators to use in such a reaction are ammonium persulfate, sodium persulfate, potassium persulfate, or a mixture of two or more such compounds. Also useful are other water-soluble inorganic peroxide compounds, for example, sodium, potassium, and ammonium perphosphates, perborates, and percarbonates. The initiator can be used in combination with a reducing agent such as sodium, potassium, or ammonium sulfite, bisulfite, metabisulfite, hyposulfite, thiosulfate, phosphite, or hypophosphite, or in combination with a ferrous, cuprous, or silver salt, or other easily oxidized metal compound. Known organic free-radical initiators can also be used in combination with a suitable surfactant such as ammonium perfluorooctanoate. The surfactant can be selected from those known to be useful in the manufacture of fluoroelastomers. A surfactant is present when using an inorganic initiator. A buffer, such as disodium phosphate, can be added to control the pH within a range of 3-7. Optionally, a known chain transfer agent can be present during the emulsion polymerization reaction. Examples of such chain transfer agents include diiodomethane, isopropanol, diethyl malonate, methylene bromide.

After completion of the emulsion polymerization reaction, the fluoroelastomer can be isolated from the resulting polymer latex by known methods, for example, by coagulation by adding an electrolyte or by freezing, followed by centrifuging or filtering and then drying the fluoroelastomer.

The polymer-forming reaction can also be carried out in bulk, or in an organic liquid containing an organic free-radical initiator.

During preparation of the fluoroelastomer, the reaction mixture is preferably heated in a reactor which has been flushed with an inert gas at about 40-130 °C under superatmospheric pressure, for example, under a pressure of about 0.7-14 MPa, preferably about 3-10 MPa. In some of the most useful procedures, the polymerization is carried out as a continuous process and the reaction mixture has an average residence time in the reactor of about 0.5 to 5 hours. Residence time can be calculated by dividing the reactor volume by the volume of latex produced per hour.

The fluoroelastomer in the majority of cases will have an inherent viscosity of about 0.2 dl/g or higher, with special preference for an inherent viscosity of about 0.3-1 dl/g. Inherent viscosities of the fluoroelastomers can be measured at 30 °C at a fluoroelastomer concentration of 0.2% by weight in a solvent consisting of 60/40/3 volume ratio of heptafluoro-2,3,3-trichlorobutane, perfluoro-(butyltetrafluorohydrofuran) and ethylene glycol dimethyl ether.

Optionally, at least one metal compound selected from divalent metal oxides or divalent metal hydroxides is frequently blended with the fluoroelastomer during preparation or before it is cured. These metal compounds absorb certain gases and acidic materials which are evolved during vulcanization that can chemically attack and weaken the fluoroelastomer. The presence of such compounds improves the heat aging resistance and thermal stability of the polymer. Representative metal compounds include the oxides and hydroxides of magnesium, zinc, calcium, or lead. A metal salt of a weak acid can be used along with the oxide and/or hydroxide. Representative metal salts of weak acids include barium-, sodium-, potassium-, lead- and calcium-/-stearate, -benzoate, -carbonate, -oxalate and -phosphite. Lead oxide is especially preferred. The metal compound is added to the fluoroelastomer in an amount equal to about 1-15%, preferably amount 2-10%, by weight of the fluoroelastomer.

When a peroxide is used as the curing agent, conventional coagents that are polyunsaturated compounds and cooperate with the peroxide curative to provide a useful cure can be added to the fluoroelastomer composition to increase its cure rate. The amount of coagent added to the composition is, generally, between about 0.25-10, usually 0.5-5 parts per 100 parts fluoroelastomer. Representative coagents well known in the art that can be used in the invention are described in U.S. Patent No. 4,214,060. Especially effective coagents include triallyl isocyanurate, triallyl cyanurate, trivinyl isocyanurate and trimethallyl isocyanurate.

In order to prevent the fluoroelastomers described above, with and without units of ethylene, that contain a bromine-containing olefin as a peroxide cure site from sticking to the mold cavity when cured from about 0.05-2 parts per 100 parts fluoroelastomer of an N,N,N',N'-tetrasubstituted 1,8-diaminonaphthalene having the formula:

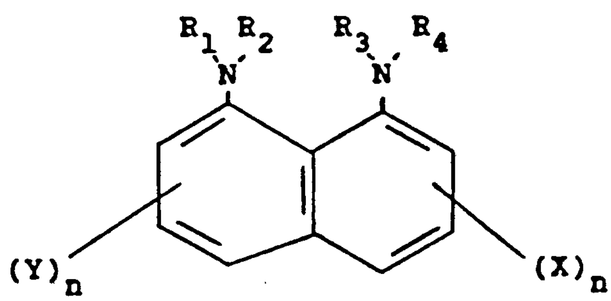

where $R_1$, $R_2$, $R_3$, $R_4$, X, Y and n have the values given above is added to the polymer composition. The resulting fluoroelastomer composition when peroxide cured is easily removed from the mold cavity without damage and it retains substantially those important physical properties associated with such fluoroelastomers.

It is believed that the unusual basicity of the N,N,N',N'-tetrasubstituted 1,8-diaminonaphthalenes is due to the steric interaction of the two peri-substituted groups and this interaction is responsible for the activity of the aromatic diamines on the fluoroelastomer. The alignment and hybridization of the lone pairs of electrons on the nitrogen atoms determine to a large extent the properties of these N,N,N',N'-tetrasubstituted 1,8-diaminonaphthalenes. This explains the formation of a very strong N-H-N hydrogen bond in the monoprotonated form of the aromatic diamine. The strong basicity of these aromatic amines can be illustrated from a comparison of the basicity of 1,8-bis(dimethylamino)naphthalene, which has a pKa of 12.34, and a more typical aromatic amine, N,N-dimethylaniline, which has a pKa of 5.1.

The N,N,N'N'-tetrasubstituted 1,8-diaminonaphthalenes used in the present invention are either commercially available or can be prepared by alkylating 1,8-diaminonaphthalene with conventional alkylating agents. For example, 1,5-dimethylnaphtho[1,8-bc]-1,5-diazacycloalkanes can be synthesized by alkylation of 1,8-bis(methylamino)naphthalene with difunctional reagents such as dihalides. 1,8-bis(dimethyl-amino)-naphthalene is the preferred aromatic diamine that is used in the present invention where $R_1$, $R_2$, $R_3$ and $R_4$ are methyl groups. This aromatic diamine is commercially available or it can be synthesized by reacting 1,8-diaminonaphthalene in tetrahydrofuran with excess dimethyl sulfate in the presence of sodium hydride. Procedures for synthesizing N,N,N',N'-tetrasubstituted 1,8-diaminonaphthalenes are further described by R. W. Alder et al., in the Journal of the Chemical Society, Perkin I, page 2840, 1981.

The N,N,N'N'-tetrasubstituted 1,8-diaminonaphthalenes used in the present invention can be divided into three categories represented generically by the following formula:

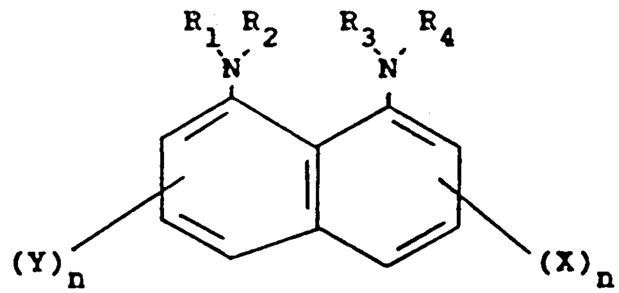

The first category includes N,N,N',N'-tetrasubstituted 1,8-diaminonaphthalenes in which $R_1$, $R_2$, $R_3$ and $R_4$ are independently alkyl groups of 1-6 carbon atoms, phenyl or benzyl. Representative compounds include 1,8-bis(diethylamino)naphthalene, 1-benzylmethylamino-8-dimethylaminonaphthalene, 1,8-bis-(dimethylamino)-2,7-dimethoxynaphthalene, and 1,8-bis(diethylamino)-2,7-dimethoxynaphthalene. Preferably, $R_1$, $R_2$, $R_3$ and $R_4$ are independently alkyl groups of 1-6 carbon atoms, especially methyl groups. The second category includes compounds in which $R_1$ and $R_2$ and/or $R_3$ and $R_4$ can be joined to form a 5 or 6 membered heterocyclic ring in which one carbon atom can be replaced by one oxygen atom or one sulfur atom. Representative compounds include 1,8-bis(1-piperidinyl)naphthalene, 1,8-bis(dimorpholino)-naphthalene, 1,8-bis(1-thiazolidinyl)naphthalene, 1,8-bis(1-pyrrolidinyl)naphthalene and 1-dimethylamino-8-morpholinonaphthalene. A third category includes compounds in which $R_1$ and $R_3$ and/or $R_2$ and $R_4$ can be joined to form a heterocyclic ring of 6-20 carbon atoms one of which may be replaced by an oxygen atom, or a sulfur atom. Representative compounds include 9,9-dimethylnaphtho[1,8-bc]-1,5-diazabicyclo-[3.3.1]-nonane, naphtho[1,8-bc]-1,5-diazabicyclo-[3.2.2]nonane, and naphtho[1,8-bc]-1,5-diazabicyclo[3.3.3]-undecane.

The amount of N,N,N',N'-tetrasubstituted 1,8-diaminonaphthalene incorporated in the fluoroelastomer composition is from 0.05-2 parts per 100 parts fluoroelastomer and, generally, from 0.1-1 part per 100 parts fluoroelastomer.

The N,N,N',N'-tetrasubstituted 1,8-diaminonaphthalene can be mixed with the tetrafluoroethylene-containing fluoroelastomer, before or after the addition of curing additives or fillers or at the time such components are added to the composition, on a two-roll rubber mill or in a Banbury mixer or the like. Mixing can be conducted at ambient temperatures, although temperatures up to 100 °C can be used. Usually the aromatic diamine is added with the compounding ingredients at ambient temperature.

The fluoroelastomers used in the present invention which are mixed with the N,N,N',N'-tetrasubstituted 1,8-diaminonaphthalene contain on a molar basis 30-80 mole % units of tetrafluoroethylene, 20-40 mole % units of perfluoro(alkyl vinyl ether), up to 3 mole % units of a bromine-containing olefin and, optionally up to 40 mole % units of ethylene. Usually the alkyl group in the perfluoro(alkyl vinyl ether) contains 1-5 carbon atoms. One preferred fluoroelastomer used in admixture with the N,N,N',N'-tetrasubstituted diaminonaphthalene contains 60-80 mole %, most preferably 65-72 mole %, units of tetrafluoroethylene; 20-40 mole %, most preferably 28-35 mole %, units of perfluoro(alkyl vinyl ether); and 0.2-3 mole %, most preferably 0.5-1.5 mole %, units of a bromine-containing olefin. Another preferred fluoroelastomer used in the present invention contains 10-40 mole %, most preferably 20-35 mole %, units of ethylene; 30-60 mole %, most preferably 30-55 mole %, units of tetrafluoroethylene; 20-40 mole %, most preferably 24-35 mole %, units of perfluoro(alkyl vinyl ether); and 0.2-3 mole %, most preferably 0.5-1.5 mole %, units of a bromine-containing olefin.

The fluoroelastomers can also contain conventional fillers such as carbon black, silica, clay and talc; other fillers, pigments, antioxidants. stabilizers and the like can be used. It is particularly advantageous to add carbon black to the fluoroelastomer to increase its modulus. Usually amounts of from 5-50 parts per hundred parts fluoroelastomer are used with the particular amount determined from the particle size of the carbon black and the desired hardness of the cured composition.

The following examples illustrate preferred embodiments of the invention.

Example 1 (not according to the invention)

A continuous emulsion polymerization was carried out in a well-stirred 2.0-liter stainless steel reaction vessel. The reactor was filled with an aqueous solution containing 2.2 g ammonium persulfate (APS) and 0.6 g sodium sulfite initiator components, 2.0 g ammonium perfluorooctanoate (FC-143) soap, and 10.0 g disodium hydrogen phosphate heptahydrate buffer per liter of deionized water. The reactor was heated to

90 °C and the aqueous solution was fed at 1.00 liter/hour (solution was split into two streams, one containing APS and the other the remaining components). The reactor was kept liquid-full at 6.3 MPa by means of a back-pressure control valve in the effluent line. After one hour the polymerization reaction was started by introducing a gaseous monomer mixture of approximately 20 g/h ethylene, 110 g/h tetrafluoroethylene, and 150 g/h perfluoro(methyl vinyl ether) fed through a diaphragm compressor. After four hours, 4-bromo-3,3,4,4-tetrafluorobutene-1 was introduced to the reactor at a rate of approximately 3 g/h. After an equilibration period of two hours, the effluent polymer latex was collected for four hours.

The polymer latex was separated from residual monomers in a degassing vessel at atmospheric pressure. The latex had a pH of 4.5 and contained about 15% solids. The fluoroelastomer was isolated from the latex by reducing the pH to about 3 with dilute nitric acid and coagulating with a calcium nitrate solution. The coagulated polymer was allowed to settle and was washed by reslurrying in water twice before filtering. The wet crumb was dried in an air oven at 50-60 °C to a moisture content of less than 1%. The fluoroelastomer had the following composition as determined by elemental analysis and $^{19}F$ nuclear magnetic resonance spectroscopy:

| Monomer | Wt % | Mole % |
|---|---|---|
| Ethylene | 6 | 21 |
| Tetrafluoroethylene | 51 | 53 |
| Perfluoro(methyl vinyl ether) | 42 | 26 |
| 4-bromo-3,3,4,4-tetrafluorobutene-1 | 1.4 | 0.7 |

The glass transition temperature (Tg) was -18 °C and crystallinity was negligible, as determined by differential scanning calorimetry (DSC) (heating mode, 10 °C/min, onset of transition). The inherent viscosity of the fluoroelastomer was 0.51 dL/g, measured at 30 °C at a polymer concentration of 0.2 g/dL in a solvent consisting of 60/40/3 volume ratio of heptafluoro-2,3,3-trichlorobutane, perfluoro(butyltetrahydrofuran) and ethylene glycol dimethyl ether. The Mooney viscosity of the fluoroelastomer measured as ML-10 (121 °C) was 48.

A curable fluoroelastomer composition was prepared by mixing the following ingredients on a two-roll rubber mill whose rolls were heated to about 30 °C: 100 parts fluoroelastomer of Example 1, 30 parts MT carbon black, 3 parts lead oxide (litharge), 3 parts triallyl isocyanurate, and 3 parts "Luperco" 101-XL peroxide [45% of 2,5-dimethyl-2,5-di(t-butyl peroxy)hexane and 55% inert filler]. Cure characteristics of the composition were measured with an oscillating disk rheometer (ODR) at a cure time of 12 minutes at 177 °C, according to ASTM D-2084. The time required to reach 90% of the cure state reached in 12 minutes was determined as $t_c90$ was 6.0 minutes. Test samples were press-cured for 15 minutes at 177 °C and post-cured in a circulating air oven for 24 hours at 232 °C. Stress-strain properties were determined according to ASTM D-412 as: 100% modulus, $M_{100}$ = 4.8 MPa; tensile strength at break, $T_B$ = 10.0 MPa; elongation at break, $E_B$ = 220%. Good low-temperature flexibility was indicated by a Clash-Berg temperature of -9 °C (temperature at which flex modulus reaches 10,000 psi or 69 MPa).

Examples 2 to 5

Fluoroelastomers were made by continuous emulsion polymerization in a well-stirred 4.0-liter stainless steel reaction vessel, under the conditions described in Table I. In each run, the reactor was filled with an aqueous solution containing ammonium persulfate initiator, $Na_2HPO_4.7H_2O$ buffer, and ammonium perfluorooctanoate soap (FC-143). The reactor was heated to the desired operating temperature and goal feed rate of aqueous solution was established for one hour. The reactor was kept liquid-full at 6.3 MPa by means of a back-pressure control valve in the effluent line. The reaction was started by introducing a monomer gas mixture [ethylene, tetrafluoroethylene, and perfluoro(methyl vinyl ether)] fed through a diaphragm compressor. After 0.5 hour, 4-bromo-3,3,4,4-tetrafluorobutene-1 was introduced as a 50 volume % solution in tertiary-butanol. After a prescribed equilibration period, the effluent latex was collected as noted in the Table. The latex was degassed and the polymer was isolated as described in Example 1. The polymerization results and polymer characteristics are listed in Table I. All polymers were amorphous elastomers.

Example 2 does not relate to a composition according to the present invention.

TABLE I

| Example | 2*) | 3 | 4 | 5 |
|---|---|---|---|---|
| **Polymerization:** | | | | |
| Temperature, °C | 90 | 90 | 100 | 100 |
| Residence time, h | 3.2 | 3.3 | 4.0 | 4.0 |
| Aq. sol'n feed, L/h | 1.25 | 1.20 | 1.00 | 1.00 |
| Ammonium persulfate, g/h | 2.7 | 3.0 | 1.6 | 1.6 |
| $Na_2HPO_4.7H_2O$, g/h | 15 | 20 | 15 | 15 |
| Ammonium perfluoro-octanoate, g/h | 1.5 | 3.2 | 2.7 | 2.7 |
| **Monomer feed g/h** | | | | |
| Ethylene | 33 | 23 | 21 | 17 |
| TFE(1) | 126 | 198 | 131 | 138 |
| PMVE(2) | 247 | 242 | 210 | 197 |
| BTFB(3) | 8.1 | 6.2 | 5.3 | 5.2 |
| Total | 414 | 469 | 367 | 357 |
| **Run duration, h** | | | | |
| Equilibration Period | 9 | 5 | 6 | 6 |
| Collection | 24 | 30 | 24 | 20 |
| **Offgas, g/h** | 122 | 113 | 99 | 99 |
| Wt % Ethylene | 0.1 | 0.0 | 0.1 | 0.0 |
| TFE | 14.2 | 16.6 | 14.7 | 16.0 |
| PMVE | 85.7 | 83.4 | 85.2 | 84.0 |
| **Latex** | | | | |
| % Solids | 18.8 | 23.7 | 21.9 | 21.2 |
| pH | 4.4 | 4.7 | 4.9 | 6.5 |
| Polym'n rate, g/h | 290 | 355 | 268 | 257 |
| Conversion, % | 70 | 76 | 73 | 72 |
| **Polymer: Composition** | | | | |
| Wt % Ethylene | 11.4 | 6.4 | 7.8 | 6.7 |
| TFE | 37.2 | 50.5 | 43.6 | 47.4 |
| PMVE | 48.9 | 41.5 | 46.9 | 44.0 |
| BTFB | 2.5 | 1.6 | 1.7 | 1.9 |
| Mole % Ethylene | 37.4 | 22.9 | 27.7 | 24.1 |
| TFE | 34.3 | 51.0 | 43.3 | 48.1 |
| PMVE | 27.2 | 25.3 | 28.2 | 26.9 |
| BTFB | 1.1 | 0.8 | 0.8 | 0.9 |
| **Viscosity** | | | | |
| Inherent Visc., dL/g | 0.59 | 0.48 | 0.54 | 0.72 |
| ML-10 (100°C) | | 56 | 60 | 85 |
| ML-10 (121°C) | 40 | 29 | 36 | 56 |
| **DSC** | | | | |
| $T_g$ °C | -12 | -13 | -16 | -18 |

(1) TFE is tetrafluoroethylene
(2) PMVE is perfluoro(methyl vinyl ether)
(3) BTFB is 4-bromo-3,3,4,4-tetrafluorobutene-1

*) not according to the present invention.

**TABLE II**

**Curing of Compositions of Fluoroelastomers of Examples 2-5**

| **Example** | 2*) | 3 | 4 | 5 |
|---|---|---|---|---|
| Composition | | | | |
| Polymer | 100 | 100 | 100 | 100 |
| MT Black | 25 | 30 | 30 | 30 |
| Litharge (PbO) | | 3 | 3 | 3 |
| Calcium Hydroxide | 5 | | | |
| TAIC[(4)] 5 | | | | |
| THAIC[(5)] | | 3 | 2.5 | 2.5 |
| Luperco 101-XL[(6)] | 3 | 5 | 5 | 5 |
| Proton Sponge[(7)] | | 0.5 | 0.5 | 0.5 |
| TMS[(8)] | 0.8 | | | |
| ODR, 30 min/177°C (ASTM D-2084) | | | | |
| $M_L$, N.m 0.8 | 0.42 | 0.34 | 0.52 | |
| $M_H$, N.m 4.5 | 5.63 | 4.28 | 5.83 | |
| $t_{c90}$, minutes | 5.1 | 9.3 | 8.6 | 7.7 |
| Stress/strain, press cured 15 min/177°C and post-cured 24 h/232°C (ASTM D-412) | | | | |
| Original | | | | |
| $M_{100}$, MPa | 11.0 | 10.6 | 8.3 | 13.8 |
| $T_B$, MPa | 18.1 | 16.3 | 15.2 | 19.9 |
| $E_B$, % 160 | 140 | 150 | 130 | |
| Heat aged, Air oven, 70 h/275°C | | | | |
| $M_{100}$, MPa | 3.8 | 4.2 | 3.1 | 4.8 |
| $T_B$, MPa | 5.7 | 7.7 | 7.7 | 9.2 |
| $E_B$, % 205 | 195 | 230 | 180 | |
| Hardness, Shore A | 75 | 81 | 75 | 79 |
| % Compression Set (ASTM D-395, Method B) | | | | |
| 70 h/25°C | 28 | 34 | 26 | 23 |
| 70 h/200°C | 73 | 36 | 31 | 27 |
| Clash-Berg, °C | -8 | -7 | -10 | -12 |

(4) TAIC is triallyl isocyanurate
(5) THAIC is trimethallyl isocyanurate
(6) 45% 2,5-dimethyl-2,5-di(t-butyl peroxy)hexane and 55% inert filler
(7) 1,8-bis(dimethylamino)napthalene
(8) TMS is tetramethylene sulfone
*) not according to the present invention.

Example 6 (not according to the invention)

An elastomeric copolymer of tetrafluoroethylene, perfluoromethyl perfluorovinyl ether and 4-bromo-3,3,4,4-tetrafluorobutene-1 is prepared by a continuous process as follows:

Continuously feeding the three monomers at a rate of 135 g/h tetrafluoroethylene, 160 g/h perfluoromethyl perfluorovinyl ether and 3.6 g/h of 4-bromo-3,3,4,4-tetrafluorobutene-1 to a 4.04 liter stainless steel pressure vessel reactor (polymerization reaction zone) which had been flushed with nitrogen while operating the stirrer of the reactor at 1000 rpm for thorough mixing of the reactor contents, and heating the reaction mixture at 70 °C under a pressure of 4.2 MPa so that the reaction mixture will undergo an emulsion polymerization reaction as it passes through the reactor. The reactor residence time is about 4 hours based on the ratio of the 4.04 liter reactor to the emulsion output rate of about 1.0 liters per hour. At the same time, constantly feeding to the reactor through a first metering pump during each hour 500 ml of a solution composed of 5.6 grams of dibasic sodium phosphate heptahydrate, and 18.8 grams of ammonium perfluorooctanoate and 2.75 grams of ammonium persulfate dissolved in 1000 ml. of water (distilled), and simultaneously feeding to the reactor through a second metering pump during each hour 500 ml of a solution composed of 2.25 grams of sodium sulfite dissolved in 1000 ml. of water. The reaction mixture is maintained at a pH of 6.4. The conversion to polymer was about 63%. The resulting copolymer latex that is formed is continuously recovered.

The copolymer is isolated from the latex by heating to 90 °C and gradually adding an aqueous solution of magnesium sulfate until the copolymer is coagulated. The resulting copolymer particles are washed with distilled water and the water is removed by filtration. The copolymer is dried in an oven at 70 °C to a moisture content of less than 1%. The resulting tetrafluoroethylene-containing fluoroelastomer contains 55.3 wt % (67.4 mole %) units of tetrafluoroethylene, 43.5 wt % (31.9 mole %) units of perfluoromethyl perfluorovinyl ether and 1.2 wt % (0.7 mole %) units of 4-bromo 3,3,4,4 tetrafluorobutene 1.

Preparation of Fluoroelastomer Compositions

A fluoroelastomer composition was prepared by mixing the following ingredients on a two-roll rubber mill whose rolls are at about 100-120 °C: 100 parts of the fluoroelastomer of Example 6 described above, 10 parts of SAF carbon black, 3 parts lead oxide, 4 parts triallyl isocyanurate, 0.3 parts 18-crown-6 (1,4,7,10,13,16-hexaoxacyclooctadecane), 5.5 parts Luperco 101XL peroxide curing agent (45% of 2,5-dimethyl-2,5-di(t-butylperoxy)hexane and 55% inert filler) and 0.5 parts of the aromatic diamine 1,8-bis-(dimethylamino)naphthalene. A control sample was prepared in the same manner using the same ingredients mentioned above except that the aromatic diamine 1,8-bis(dimethylamino)naphthalene was omitted from the formulation.

Physical Properties of Fluoroelastomer Compositions

To determine if there are any detrimental effects on the physical properties of the fluoroelastomer composition due to the addition of 1,8-bis(dimethylamino)naphthalene the following tests were performed. Cure properties of samples of the fluoroelastomer containing the aromatic diamine and the fluoroelastomer used in the control experiment were measured with an oscillating disk rheometer (ODR) at a cure time of 30 minutes and a cure temperature of 177 °C, according to ASTM D-2084. Table III shows the value of $t_c90$, i.e., the time in minutes required to reach 90% of the cure state reached in 30 minutes. Test samples of the above described tetrafluoroethylene-containing fluoroelastomers were press-cured in an electrically heated press for 15 minutes at 190 °C at a pressure of 200 MPa and post-cured in an oven under nitrogen during a cycle of: 6 hours to reach 204 °C, 18 hours at 204 °C, 6 hours to reach 288 °C and 18 hours at 288 °C. Stress/strain properties of: tensile at break ($T_B$), 100% modulus ($M_{100}$), and elongation at break ($E_B$) were determined according to ASTM D-412. Compression set values of the samples were determined using ASTM D-395. The results of these tests are shown in Table III.

TABLE III

| Ingredients | Example 6 | Control |
|---|---|---|
| Fluoroelastomer | 100 | 100 |
| SAF Carbon Black | 10 | 10 |
| PbO | 3 | 3 |
| Triallyl Isocyanurate | 4 | 4 |
| 18-Crown-6 | 0.3 | 0.3 |
| Luperco® 101XL Curing Agent | 5.5 | 5.5 |
| 1,8-bis(dimethylamino)-naphthalene | 0.5 | - |
| ODR-177°C/30 minutes | | |
| $t_c90$ (minutes) | 3.8 | 3.3 |
| Stress/Strain Properties | | |
| $M_{100}$ (MPa) | 15.9 | 10.3 |
| $T_B$ (MPa) | 15.9 | 15.9 |
| $E_B$ (%) 100 | 170 | |
| Compression Set Resistance | | |
| 70 hours/200°C (%) | | |
| Pellets | 68 | 87 |
| | 70 | 91 |

The data given in Table III show that the addition of the aromatic diamine 1,8-bis(dimethylamino)-naphthalene to the fluoroelastomer does not detrimentally affect the important physical properties of the fluoroelastomer composition.

Improvement in Demolding

The following test measures the adhesive forces between a metal surface typical of that used in a mold cavity and the cured fluoroelastomer compositions of Example 6 and the Control experiment. This test has been found to provide a quantitative value which correlates inversely with the ease of demoldability of the fluoroelastomer composition from a metal mold cavity, i.e., a high test value indicates the composition is difficult to remove from the mold cavity.

An Instron testing machine is used to measure the amount of force in psi ($N/m^2$) required to pull a 1 in. (2.5 cm) wide stainless steel strip from the center of 1 x 3 x 1/4 in. (2.5 x 7.6 x 0.6 cm) rectangular fluoroelastomer composition, described hereinabove, that are formed into compression-molded slabs into which the stainless steel strip is embedded to a depth of 1 in. (2.5 cm). The test sample is prepared by making a 1 in. (2.5 cm) deep slit in a 1 x 3 x 1/4 in. (2.5 x 7.6 x 0.6 cm) rectangular sample of the uncured fluoroelastomer such that the slit is parallel to the 3 in. (7.6 cm) face, runs across the entire width of the sample and is positioned equidistant between the two 3-inch (7.6 cm) faces of the sample. A 1 x 4 x 1/8 in. (2.5 x 10.2 x 0.3 cm) stainless steel strip is inserted into the slit. Spacers consisting of 1 x 3 x 1/16 in. (2.5 x 7.6 x .16 cm) steel strips are placed above and below the stainless steel strip abutting the fluoroelastomer composition to maintain the proper configuration. The assembly is then subjected to a 15-minute press cure at 177°C in a hydraulic press. The force required to remove the stainless steel strip from the cured polymer is determined with an Instron testing machine at 177°C and a crosshead speed of 0.5 inches/min. (1.3 cm/min.). Since both sides of the 1 sq. inch 6.4 $cm^2$ embedded stainless steel strip contribute to the tangential demolding force, 2 x $F_{tan}$ (where F is force in pounds per square inch corresponding to $N/m^2$, tan is tangent) is the quantity measured. Four determinations were made for each sample. Mean values of 2 x $F_{tan}$ and standard deviations are shown in Table IV.

Table IV

| Mold Sticking Force KN/$m^2$ | Example 6 | Control |
|---|---|---|
| 2 x $F_{tan}$ (psi)<br>Mean Standard Deviation | 150.3 (21.8)<br>25.6(4) | 319.9(46.4)<br>62.0 (9) |

The results given in Table IV quantitatively show that substantially less force is required to separate the fluoroelastomer rubber vulcanizate containing the aromatic diamine from the steel strip than is required to remove the control sample.

Example 7 (not according to the invention)

A continuous emulsion polymerization was carried out in a well-stirred 4 liter stainless steel reaction vessel. The reactor was filled with an aqueous solution containing 2.5g ammonium persulfate (APS) initiator, 16.67g disodium hydrogen phosphate heptahydrate buffer and 2.67g ammonium perfluorooctanoate soap per liter of deionized water. The reactor was heated to 90°C and the aqueous solution was metered in at a rate of 1.20 l/h. The reactor was kept liquid-full at 6.3 MPa by means of a back-pressure control valve in the effluent line. After one hour the polymerization reaction was started by introducing a gaseous monomer mixture consisting of tetrafluoroethylene, perfluoromethyl perfluorovinyl ether and ethylene in a weight ratio of 42.8/52.3/4.9 which was fed through a diaphragm compressor at 462.3 g/h. After 0.5 hr, 4-bromo-3,3,4,4-tetrafluorobutene-1 was introduced at a rate of 6.2g/h, metered as 7.6 ml/h of a 50 vol% solution in t-butanol.

The polymer latex effluent was separated from residual monomers in a degassing vessel at atmospheric pressure. Monomer offgas flow was measured at 113.0 g/h and had a composition of 0.01 weight % ethylene, 16.6 weight % tetrafluoroethylene and 83.4 weight % perfluoromethyl perfluorovinyl ether after the reactor had equilibrated for five hours. The tetrafluoroethylene-containing fluoroelastomer had the following composition:

Table V

| Monomer | Incorporated in Polymer | |
|---|---|---|
| | wt % | Mole % |
| Ethylene | 6.4 | 22.9 |
| Tetrafluoroethylene | 50.5 | 51.0 |
| Perfluoromethyl perfluoro vinyl ether | 41.5 | 25.3 |
| 4-bromo-3,3,4,4-tetrafluorobutene-1 | 1.6 | 0.8 |

The fluoroelastomer was isolated from the latex by reducing the pH to about 3 with dilute nitric acid and coagulating with a calcium nitrate solution. The coagulated polymer was allowed to settle and was washed by reslurrying in water twice and filtering. The wet crumb was dried in an air oven at 50-60°C to a moisture content of less than 1%.

Preparation of Fluoroelastomer Compositions

A fluoroelastomer composition was prepared by mixing the following ingredients on a two-roll rubber mill whose rolls were heated to about 30°C: 100 parts fluoroelastomer of Example 7, 30 parts MT carbon black, 3 parts lead oxide, 3 parts trimethallyl isocyanurate, 5 parts Luperco® 101-XL peroxide curing agent, 0.5 part of the aromatic diamine 1,8-bis(dimethylamino)naphthalene and 1 part processing aid (75% tetramethylene sulfone, 25% inert support). A Control experiment was conducted with 100 parts of the fluoroelastomer of Example 7 and containing the same ingredients as described above, except the composition did not contain the aromatic diamine additive 1,8-bis(dimethylamino)naphthalene.

Physical Properties of Fluoroelastomer Compositions

To determine if there are any detrimental effects on the physical properties of fluoroelastomer composition due to the addition of 1,8-bis(dimethylamino)naphthalene the following tests were performed. Cure properties of samples of the fluoroelastomer compositions were measured with an oscillating disk rheometer (ODR) at a cure time of 30 minutes and a cure temperature of 177°C, according to ASTM D-2084. Table VI shows the value of $t_c90$, i.e., the time in minutes required to reach 90% of the cure state reached in 30 minutes. Test samples of the fluoroelastomer composition described above were press-cured in an electrically heated press for 15 minutes at 177°C and post-cured in a circulating air oven at 232°C for 24 hours. Compression set values of the samples were determined using ASTM D-395. Stress/strain properties of: tensile at break ($T_B$) 100% modulus ($M_{100}$), and elongation at break ($E_B$) were determined according to ASTM D-412. Compression set values of the samples were determined using ASTM D-395. The results of these tests are shown in Table VI.

Table VI

| Ingredients | Fluoroelastomer Composition | Control |
|---|---|---|
| Fluoroelastomer | 100 | 100 |
| MT Carbon Black | 30 | 30 |
| PbO | 3 | 3 |
| Trimethallyl Isocyanurate | 3 | 3 |
| Luperco® 101-XL | 5 | 5 |
| 1,8-bis(dimethylamino)naphthalene | 0.5 | - |
| Processing Aid | 1 | 1 |
| ODR 177°C/30 Minutes | | |
| $t_c90$ (minutes) | 10.5 | 11.7 |
| Stress/Strain Properties | | |
| $M_{100}$ (MPa) | 13.5 | 10.0 |
| $T_B$ (MPa) | 14.7 | 16.1 |
| $E_B$ (%) | 105 | 145 |
| Compression Set Resistance | | |
| 70 hrs/100°C (%) | 41 | 44 |

The results given in Table VI show that addition of 1,8-bis(dimethylamino)naphthalene does not adversely affect physical properties of the fluoroelastomer.

Improvement in Demolding

The procedure described above in Example 6 for measuring the adhesive forces between a metal surface typical of that used in a mold cavity and the cured fluoroelastomer compositions were reported for the composition of Example 7 and the Control. Four determinations were made for each sample of the fluoroelastomer compositions described above in Table IV. Mean values of 2 x $F_{tan}$ and standard deviations are shown in Table VII below.

Table VII

| Mold Sticking Force | Fluoroelastomer Composition | Control |
|---|---|---|
| 2 x $F_{tan}$ $KN/m^2$ (psi) | 96.5 (14) | 199.9 (29) |
| Mean Standard Deviation | 20.7 (3) | 20.7 (3) |

The results given in Table VII quantitatively show that substantially less force is required to separate the fluoroelastomer vulcanizate containing the aromatic diamine from the steel strip than is required to remove

the control sample.

**Claims**

1. A peroxide-curable fluoroelastomer composition which comprises
(a) a fluoroelastomer whose interpolymerized units consist of 30-80 mole % of units of tetrafluoroethylene, 20-40 mole % of units of perfluoroalkyl perfluorovinyl ether, up to 3 mole % of units of a bromine-containing olefin and, optionally, up to 40 mole % of units of ethylene, and
(b) from 0.05-2 parts per 100 parts fluoroelastomer of an N,N,N',N'-tetrasubstituted 1,8-diaminonaphthalene having the formula:

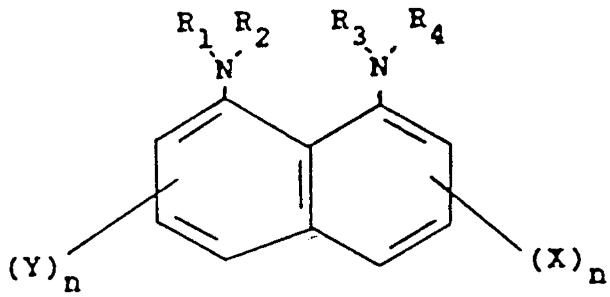

wherein $R_1$, $R_2$, $R_3$ and $R_4$ are independently alkyl groups of 1-6 carbon atoms, phenyl or benzyl, $R_1$ and $R_2$ and/or $R_3$ and $R_4$ can be joined to form a 5- or 6-membered heterocyclic ring in which a carbon atom can be replaced by an oxygen or a sulfur atom, $R_1$ and $R_3$ and/or $R_2$ and $R_4$ can be joined to form a heterocyclic ring of 6-20 carbon atoms in which a carbon atom can be replaced by an oxygen or a sulfur atom, X and Y are independently an alkyl group or an alkoxy group containing 1-4 carbon atoms and n is 0-3.

2. A peroxide-curable fluoroelastomer composition of Claim 1 wherein $R_1$, $R_2$, $R_3$ and $R_4$ are independently alkyl groups of 1-6 carbon atoms.

3. A peroxide-curable fluoroelastomer composition of Claim 1 wherein the fluoroelastomer contains from 60-80 mole % units of tetrafluoroethylene, 20-40 mole % units of perfluoromethyl perfluorovinyl ether and 0.2-3 mole % of units of a bromine-containing olefin.

4. A peroxide-curable fluoroelastomer composition of Claim 1 wherein the fluoroelastomer contains from 30-60 mole % units of tetrafluoroethylene, 20-40 mole % units of perfluoroalkyl perfluorovinyl ether, 10-40 mole % units of ethylene and up to 3 mole % of units from a bromine-containing olefin.

5. A peroxide-curable fluoroelastomer composition of anyone of Claims 1 to 4 wherein $R_1$, $R_2$, $R_3$ and $R_4$ are methyl.

6. A peroxide-curable fluoroelastomer composition of Claim 3 or 4 wherein units of the bromine-containing olefin are from 4-bromo-3,3,4,4-tetrafluorobutene-1.

7. A peroxide-curable fluoroelastomer composition of Claim 1 which also contains 1-15 mole %, based on the weight of the fluoroelastomer, of a metal compound that is a divalent metal oxide or hydroxide.

8. A peroxide-curable fluoroelastomer composition of Claim 1 which also contains 0.25-10 parts per 100 parts fluoroelastomer of a coagent that is a polyunsaturated compound.

9. A peroxide-curable fluoroelastomer composition of Claim 1 which also contains 0.5-10%, based on the weight of the fluoroelastomer. of an organic peroxide curing agent.

**Patentansprüche**

1. Peroxid-aushärtbare Fluorelastomer-Zusammensetzung, umfassend

(a) ein Fluorelastomer, dessen interpolymerisierte Einheiten aus 30 bis 80 Mol.-% Tetrafluorethylen-Einheiten, 20 bis 40 Mol-% Perfluoralkylperfluorvinylether-Einheiten, bis zu 3 Mol-% Einheiten eines Brom enthaltenden Olefins und gegebenenfalls bis zu 40 Mol-% Ethylen-Einheiten bestehen und
(b) 0,05 bis 2 Teile, auf 100 Teile des Fluorelastomers, eines N,N,N',N'-tetrasubstituierten 1,8-Diaminonaphthalins der Formel

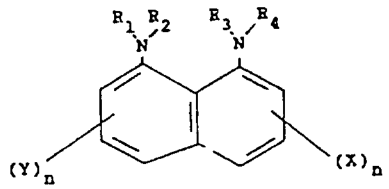

,

worin

| | |
|---|---|
| $R_1$, $R_2$, $R_3$ und $R_4$ | unabhängig Alkyl-Gruppen mit 1 bis 6 Kohlenstoff-Atomen, Phenyl oder Benzyl sind, |
| $R_1$ und $R_2$ und/oder $R_3$ und $R_4$ | zu einem 5- oder 6-gliedrigen heterocyclischen Ring, in dem ein Kohlenstoff-Atom durch ein Sauerstoff- oder ein Schwefel-Atom ersetzt sein kann, miteinander verbunden sein können, |
| $R_1$ und $R_3$ und/oder $R_2$ und $R_4$ | zu einem heterocyclischen Ring mit 6 bis 20 Kohlenstoff-Atomen, in dem ein Kohlenstoff-Atom durch ein Sauerstoff- oder ein Schwefel-Atom ersetzt sein kann, miteinander verbunden sein können, |
| X und Y | unabhängig eine Alkyl-Gruppe oder eine AlkoxyGruppe mit 1 bis 4 Kohlenstoff-Atomen sind und |
| n | 0 bis 3 ist. |

**2.** Peroxid-aushärtbare Fluorelastomer-Zusammensetzung nach Anspruch 1, worin $R_1$, $R_2$, $R_3$ und $R_4$ unabhängig Alkyl-Gruppen mit 1 bis 6 Kohlenstoff-Atomen sind.

**3.** Peroxid-aushärtbare Fluorelastomer-Zusammensetzung nach Anspruch 1, worin das Fluorelastomer 60 bis 80 Mol.-% Tetrafluorethylen-Einheiten, 20 bis 40 Mol-% Perfluormethylperfluorvinylether-Einheiten und 0,2 bis 3 Mol-% Einheiten eines Brom enthaltenden Olefins enthält.

**4.** Peroxid-aushärtbare Fluorelastomer-Zusammensetzung nach Anspruch 1, worin das Fluorelastomer 30 bis 60 Mol.-% Tetrafluorethylen-Einheiten, 20 bis 40 Mol-% Perfluoralkylperfluorvinylether-Einheiten, 10 bis 40 Mol-% Ethylen und bis zu 3 Mol-% Einheiten eines Brom enthaltenden Olefins enthält.

**5.** Peroxid-aushärtbare Fluorelastomer-Zusammensetzung nach irgendeinem der Ansprüche 1 bis 4, worin $R_1$, $R_2$, $R_3$ und $R_4$ Methyl sind.

**6.** Peroxid-aushärtbare Fluorelastomer-Zusammensetzung nach Anspruch 3 oder 4, worin die Einheiten des Brom enthaltenden Olefins solche von 4-Brom-3,3,4,4-tetrafluorbuten-1 sind.

**7.** Peroxid-aushärtbare Fluorelastomer-Zusammensetzung nach Anspruch 1, außerdem enthaltend 1 bis 15 Mol-%, bezogen auf das Gewicht des Fluorelastomers, einer Metall-Verbindung, die ein Oxid oder Hydroxid eines zweiwertigen Metalls ist.

**8.** Peroxid-aushärtbare Fluorelastomer-Zusammensetzung nach Anspruch 1, außerdem enthaltend 0,25 bis 10 Teile, auf 100 Teile des Fluorelastomers, eines Co-Agens, das eine mehrfach ungesättigte Verbindung ist.

**9.** Peroxid-aushärtbare Fluorelastomer-Zusammensetzung nach Anspruch 1, außerdem enthaltend 0,5 bis 10 Gew.-%, bezogen auf das Gewicht des Fluorelastomers, eines organischen Peroxid-Härtungsmittels.

## Revendications

1. Une composition d'élastomère fluoré durcissable par un peroxyde, qui comprend
(a) un élastomère fluoré dont les motifs interpolymérisés consistent en 30 à 80 moles % de motifs de tétrafluoréthylène, 20 à 40 moles % de motifs d'éther de perfluoralkyle et de perfluorovinyle, jusqu'à 3 moles % de motifs d'une oléfine bromée et, facultativement, jusqu'à 40 moles % de motifs d'éthylène, et
(b) 0,05 à 2 parties, pour 100 parties d'élastomère fluoré, d'un 1,8-diaminonaphtalène N,N,N',N'-tétrasubstitué répondant à la formule :

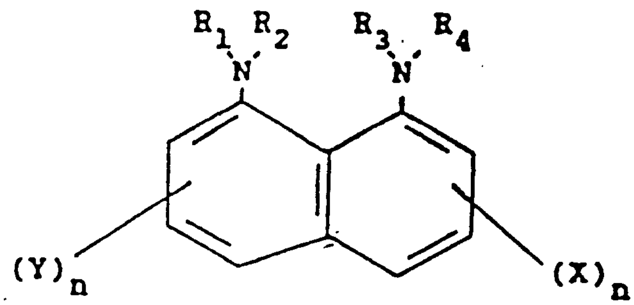

dans laquelle $R_1$, $R_2$, $R_3$ et $R_4$ sont indépendamment des groupes alkyles de 1 à 6 atomes de carbone, phényle ou benzyle, $R_1$ et $R_2$ et/ou $R_3$ et $R_4$ peuvent être reliés pour former un hétérocycle penta- ou hexagonal dans lequel un atome de carbone peut être remplacé par un atome d'oxygène ou de soufre, $R_1$ et $R_3$ et/ou $R_2$ et $R_4$ peuvent être reliés pour former un hétérocycle de 6 à 20 atomes de carbone dans lequel un atome de carbone peut être remplacé par un atome d'oxygène ou de soufre, X et Y sont indépendamment un groupe alkyle ou un groupe alcoxy contenant 1 à 4 atomes de carbone, et n est 0 à 3.

2. Une composition d'élastomère fluoré durcissable par un peroxyde de la revendication 1, dans laquelle $R_1$, $R_2$, $R_3$ et $R_4$ sont indépendamment des groupes alkyles de 1 à 6 atomes de carbone.

3. Une composition d'élastomère fluoré durcissable par un peroxyde de la revendication 1, dans laquelle l'élastomère fluoré contient 60 à 80 moles % de motifs de tétrafluoréthylène, 20 à 40 moles % de motifs d'éther de perfluorométhyle et de perfluorovinyle et 0,2 à 3 moles % de motifs d'une oléfine bromée.

4. Une composition d'élastomère fluoré durcissable par un peroxyde de la revendication 1, dans laquelle l'élastomère fluoré contient 30 à 60 moles % de motifs de tétrafluoréthylène, 20 à 40 moles % de motifs d'éther de perfluoralkyle et de perfluorovinyle, 10 à 40 moles % de motifs d'éthylène et jusqu'à 3 modes % de motifs d'une oléfine bromée.

5. Une composition d'élastomère fluoré durcissable par un peroxyde de l'une quelconque des revendications 1 à 4, dans laquelle $R_1$, $R_2$, $R_3$ et $R_4$ sont des groupes méthyle.

6. Une composition d'élastomère fluoré durcissable par un peroxyde de la revendication 3 ou 4, dans laquelle les motifs de l'oléfine bromée sont des motifs de 4-bromo-3,3,4,4-tétrafluorobutène-1.

7. Une composition d'élastomère fluoré durcissable par un peroxyde de la revendication 1, qui contient également 1 à 15 modes %, par rapport au poids de l'élastomère fluoré, d'un composé métallique qui est un oxyde ou hydroxyde de métal divalent.

8. Une composition d'élastomère fluoré durcissable par un peroxyde de la revendication 1, qui contient également 0,25 à 10 parties, pour 100 parties d'élastomère fluoré, d'un co-agent qui est un composé polyinsaturé.

9. Une composition d'élastomère fluoré durcissable par un peroxyde de la revendication 1, qui contient également 0,5 à 10 %, par rapport au poids de l'élastomère fluoré, d'un peroxyde organique comme agent durcisseur.